(19) Europäisches Patentamt
European Patent Office
Office européen des brevets

(11) **EP 3 419 356 A1**

(12) **EUROPEAN PATENT APPLICATION**

(43) Date of publication:
**26.12.2018 Bulletin 2018/52**

(51) Int Cl.:
*H04W 72/04* (2009.01)

(21) Application number: **17176553.0**

(22) Date of filing: **19.06.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Nokia Solutions and Networks Oy
02610 Espoo (FI)**

(72) Inventors:
• **Atawia, Ramy
2018 Antwerpen (BE)**
• **Gacanin, Haris
2018 Antwerpen (BE)**

(74) Representative: **IP HILLS NV
Hubert Frère-Orbanlaan 329
9000 Gent (BE)**

(54) **SELECTING A BANDWIDTH OF A COMMUNICATION LINK**

(57) According to an embodiment, a device (200) is disclosed for selecting a bandwidth of a communication link (120, 121) between an access point (100) and an associated device (110, 111) in an environment (140), the device (200) comprising an observation module (201) configured to determine a distance of the communication link (120, 121); and a database (202) comprising a set of potential distances; and wherein each potential distance is related to an optimal bandwidth; and a channel bonding module (203) configured to select from the set the optimal bandwidth of the communication link (120, 121) for the determined distance.

Fig. 2

## Description

## Technical Field

The present invention generally relates to the field of channel bonding as specified in IEEE 802.11ac. More specifically it relates to the determination of a link bandwidth in a channel bonding arrangement.

## Background

Channel bonding is a new feature in the IEEE 802.11ac specification. It is used to increase a link's bandwidth and thus its capacity. Two or more channels may be bounded resulting in a bandwidth of, for example, 20, 40, 80 or even 160 MHz.

Two strategies are available to select a bonding configuration, namely a static and a dynamic one. In the first strategy, two or more channels are bonded and used throughout the entire communication. In the dynamic strategy, the bandwidth of the link is adapted during transmission, for example, at every transmission of a frame. In both strategies, the environment wherein a network device operates is scanned and based on this the channel bonding configuration is set.

Nevertheless, a communication link operating in bonded channels may suffer from interfering signals originating from other devices, especially when the bandwidth of the link is high compared to the total available bandwidth. Thus, increasing the bandwidth of the link may increase the probability of packet collisions. Therefore, a trade-off needs to be made between the bandwidth and the hindrance caused by interference.

Efficient bonding will be highly dependent on the current network state, which further depends on the type of users, an access point location, neighboring interference and other parameters. Existing bandwidth configuration strategies therefore rely on interference metrics to select the optimal bandwidth.

The neighboring interference originates from, among others, other access points and associated devices operating in the same and/or adjacent environment. Therefore, the communication links mutually interfere with each other. Thus, the determination of optimal bandwidths in a channel bonding arrangement needs to be performed in a coordinated way in order to optimize the overall performance of all networks.

## Summary

This is however a problem since in most practical cases, neighboring access points are mostly not managed by only one operator. A change in the channel bonding configuration at one access point will thus impact the performance of other access points. Furthermore, when a channel bonding configuration is changed, an access point may adapt its modulation and coding scheme, MCS, in order to adapt its throughput based on the changed interference.

In other words, an increase in the channel bandwidth will not necessarily lead to an increase in performance due to the above identified interaction and vice versa.

It is an object of the present disclosure to alleviate the above problem and to provide, among others, a device for selecting a bandwidth of a communication link in a channel bonding arrangement in a more optimal and efficient way.

This object is achieved, according to a first aspect, by a device for selecting a bandwidth of a communication link between an access point, AP, and an associated device, STA, in a wireless network, the device comprising:

- an observation module configured to determine a distance of the communication link; and
- a database comprising a set of potential distances; and wherein each potential distance is related to an optimal bandwidth; and
- a channel bonding module configured to select from the set the optimal bandwidth of the communication link for the determined distance.

In order to determine the distance of the communication link, the observation module may collect different parameters such as, for example, received signal strength indicators, RSSI, and/or round trip times. Next, the distance is calculated, e.g. by using localization techniques such as an RSSI localization technique. This distance may correspond to the physical distance between the AP and the STA, but may also correspond to an electromagnetic distance. The latter may, for example, be longer than the physical distance if obstacles are located in the line of sight between the AP and the STA, especially if these obstacles attenuate waves used by the link to communicate.

By determining the distance of the communication link, and thus the distance between the AP and the STA, the configuration of the environment wherein the link operates is described.

Next to the observation module, the system also comprises a database. In this database, a set of distances are each related to an optimal bandwidth. These distances are potential distances since they correspond to possible or potential distances between the AP and the STA located in the environment. The optimal bandwidth related to a potential distance is then that bandwidth which is preferably used for the communication link between the AP and STA with that given distance between each other.

Finally, the channel bonding module matches the distance of the communication link with one of the potential distances of the database. The optimal bandwidth of that matched potential distance is selected and used by the communication link.

Because the distance is a measure of the position of the STA, the interference will change with the distance. Furthermore, as the interference may be different within different channels, the optimal bandwidth may differ depending on the distance. Therefore, it is an advantage that an optimal bandwidth can be selected, i.e. one the doesn't necessarily correspond to the largest bandwidth.

According to an embodiment, the optimal bandwidth corresponds to a bandwidth with a highest throughput for the potential distance.

Thus, depending on the location of a STA within the network, the STA is offered the highest throughput which does not necessarily correspond to the largest bandwidth. For example at a certain distance, a smaller bandwidth may result to a higher modulation and coding scheme which outperforms a higher bandwidth that would result in a lower modulation and coding scheme due to the increased interference.

According to an embodiment, each potential distance is further related to a potential throughput achievable when selecting the bandwidth according to the potential distance.

Thus, in the database a potential distance is related to an optimal bandwidth, and further related to a potential throughput. This potential throughput is that one that potentially may be obtained when the optimal bandwidth is selected. Thus, the communication link between the AP and the STA is associated to the potentially highest throughput for a given channel bonding configuration.

According to an embodiment, the device further comprises an updating module configured to update in the database the potential throughput by the achieved throughput at the selected bandwidth.

In most practical cases the desired achievable throughput differs from the achieved one due to, for example, changing interference in the network. This means that the achieved throughput may be less than the potential throughput. By updating the database in this way, the database represents the network in a more accurate way.

According to an embodiment, the updating module is further configured to add in the database a new potential distance when a difference between the determined distance and the nearest potential distance is greater than a predefined value.

The difference between the determined distance and a nearest potential one in the database may thus be greater than a predefined value. By updating the database with a new potential distance, it will thus more accurately model the network by a learning behaviour.

When the database is updated with a new potential distance, the optimal bandwidth may in a first place be the same as the nearest potential distance, or an interpolated value of the nearest higher and nearest lower one.

According to an embodiment the updating module is further configured to relate as the bandwidth of the new potential distance the highest possible bandwidth of the communication link.

According to an embodiment, the device further comprises a learning module configured to optimize the selected optimal bandwidth when the achieved throughput is less than a predefined threshold.

If the achieved throughput of the communication link is insufficient, meaning that it is less than a predefined threshold, the learning module adapts the bandwidth in order to increase the throughput. In that way, the bandwidth related to a potential distance in the database is optimized.

According to an embodiment, the learning module is further configured to optimize the bandwidth by:

- decreasing the bandwidth when the determined distance is less than or equal to the potential distance; and/or
- increasing the bandwidth when the determined distance is greater than the potential distance.

If the STA is located closer to the AP compared to the potential distance, the bandwidth is decreased. In the other situation, the bandwidth is increased. By doing so, the bandwidth is adapted to the location of the devices in the environment.

According to a second aspect, the disclosure relates to a method for selecting a bandwidth of a communication link between an access point, AP, and an associated device, STA, in a wireless network, the method comprising the steps of:

- determining a distance of the communication link; and
- selecting from a database an optimal bandwidth of the communication link for the determined distance; and wherein the database comprises a set of potential distances; and wherein each potential distance is related to a respective optimal bandwidth.

According to a third aspect, a computer program product is disclosed comprising computer-executable instructions for performing the method according to the second aspect when the program is run on a computer.

According to a fourth aspect, a computer readable storage medium is disclosed comprising the computer program product according to the third aspect.

According to a fifth aspect, a data processing system is disclosed programmed for carrying out the method according to the second aspect.

## Brief Description of the Drawings

Fig. 1 illustrates an environment comprising access points and associated devices; and

Fig. 2 illustrates a device for selecting a bandwidth of a communication link according to an embodiment of the disclosure; and

Fig. 3 illustrates steps performed to select a bandwidth of a communication link according to an embodiment of the disclosure; and

Fig. 4 illustrates a computer system that can be configured to execute one or more embodiments of the method for selecting a bandwidth of a communication link.

**Detailed Description of Embodiment(s)**

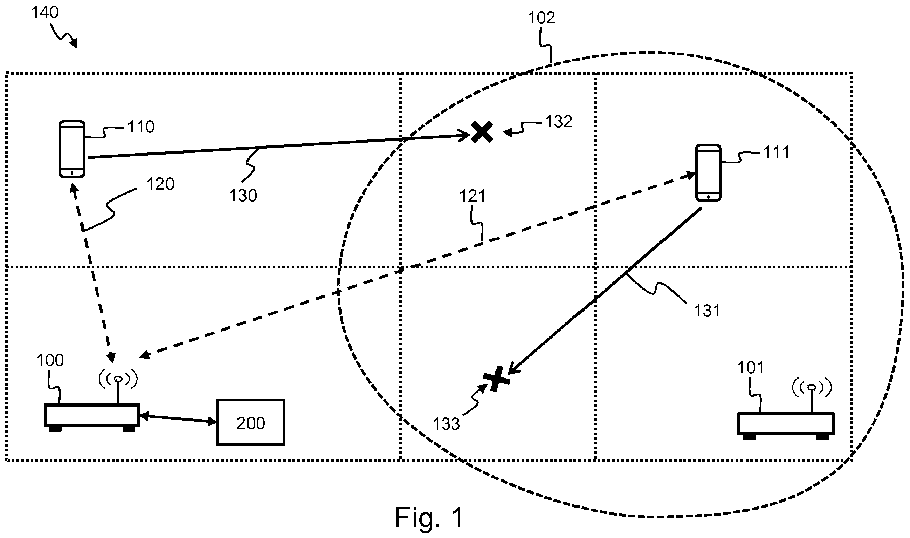

Fig. 1 illustrates an environment wherein different access points, APs, and associated devices, STAs, are operating. For example, in this environment 140 APs 100 and 101 are operating and STAs 110 and 111 are linked to AP 100. The communication link of STA 110 with AP 100 is illustrated by the link 120 and the communication link between STA 111 and AP 100 is illustrated by the link 121. The region wherein AP 101 broadcasts is illustrated by region 102.

The STAs 110 and 111 may be moved in the environment 140. For example, STA 110 may be moved from its current location to location 132. The movement is illustrated by the vector 130. The STA 111 may be moved as well from its current location to location 133 and illustrated by the vector 131.

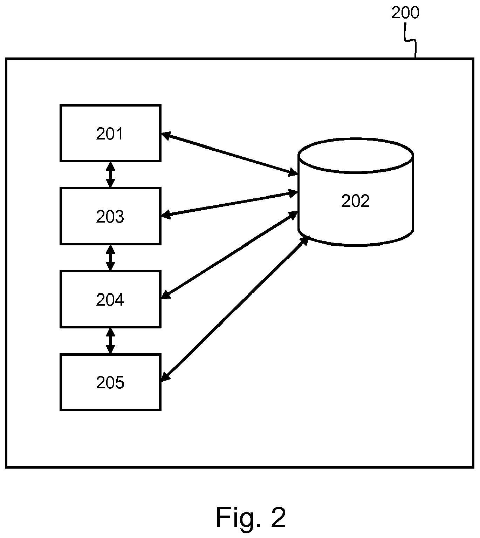

According to an embodiment, the disclosure relates to a system for selecting a bandwidth of a communication link. Fig. 2 illustrates such a device 200. For the communication links 120 and 121 the device 200 selects an optimal bandwidth in a channel bonding configuration.

In order to determine this bandwidth, the device 200 comprises, according to an embodiment, an observation module 201, a database 202, a channel bonding module 203, an updating module 204 and a learning module 205.

The observation module 201 is configured to determine a communication link, for example link 120. This distance may correspond to the distance between the AP 100 and the STA 110, but may also be the electromagnetic distance which takes into account obstacles which attenuate the waves used by the communication link.

The determination of the distance of the link 120 may be performed by WLAN location determination techniques, such as, for example, a WLAN location determination via clustering and probability distributions as published in Pervasive Computing and Communications, 2003, Proceedings of the First IEEE International Conference on IEEE, 2003.

The device 200 further comprises a database 202. In this database 202 case tuples are stored which comprises potential distances, bandwidths and throughputs. Through learning, reasoning and optimization approaches, these tuples are constructed in the database 202 and used by the device 200 in selecting the optimal bandwidth in a channel bonding configuration.

The distance determined by the observation module 201 is matched with one of the potential distances in the database 202. Next, the related bandwidth is this potential distance is selected and the channel bonding module sets this bandwidth as the optimal bandwidth of the communication link 120.

The same procedure may be followed to determine the bandwidth of the communication link 121.

When a STA moves in the environment 140, for example STA 110 moves to location 132 and/or STA 111 moves to location 133, then the distances between the STAs and the AP 100 and the corresponding distance of the communication links changes well. Again, the distance is determined by the observation module 201, the database is consulted 202 and the optimal bandwidth is selected by the channel bonding module 203.

In each tuple of the database, the throughput may be, according to an embodiment, the potential throughput achievable when selecting the bandwidth with the matched potential distance. This potential throughput may however not be achieved. The updating module 204 will then updated this throughput in the tuple by the achieved throughput.

The update module 204 is also configured to add in the database 202 a new tuple. This may be done when the distance determined by the observation module doesn't match with a potential distance in the database 202. The lack of a match occurs, for example, if the difference between the nearest potential distance and the determined distance is greater than a predefined value.

The device 200 further comprises a learning module 205. This learning module 205 is configured to optimize the selected bandwidth when the achieved band is less than a predefined threshold.

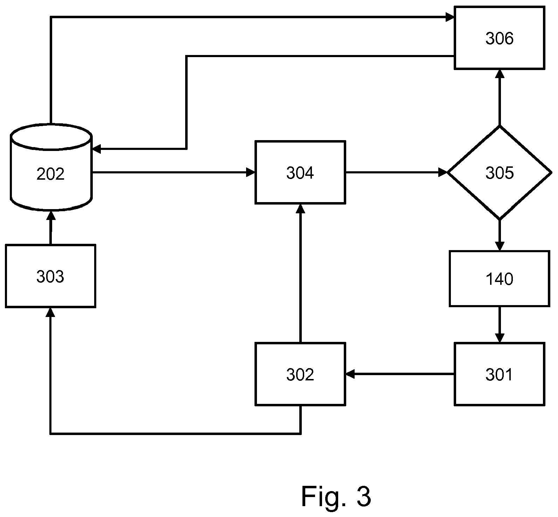

The steps performed to select, update and optimize a bandwidth are, according to an embodiment, based on case based reasoning. These steps are illustrated in Fig. 3 are now further discussed.

Case based reasoning is an artificial intelligence approach to populate the database 202 and used for reconfiguring the channel bonding configuration and to select the optimal bandwidth. The main case based reasoning approach is illustrated in Fig. 3 and comprises six main steps. These six steps are sensing 301, perception 302, learning 303, reasoning 304, decision making 305 and optimization 306. Each of these steps are now discussed in more detail.

In the first step, namely sensing 301, the device 200 collects the necessary information that describes the current situation of the environment 140. This information is collected by the observation module 201.

In order to measure distances of the communication links 120 and 121, parameters such as received signal strength indicator, RSSI, and/or round trip time, RTT, are collected. In addition to these parameters, other metrics for determining a throughput are collected as well. This may be done by collecting the total transmitted and received bytes by the STAs 110 and 111 and/or the selected modulation and coding scheme, MCS, values.

In the next step 202, the collected information is transformed into network metrics that by the decision maker in the fifth step 205. The collected information is used to calculate the location of both the STAs 110 and 111 and the AP 100. These calculations may thus be used to populate the first column of the tuples in the database 202.

The second metric calculated in this step 202 is the throughput. When an optimal bandwidth is selected for a communication link, the resulted throughput is calculated and later used to update a third column in a tuple in the next step, namely the learning step 303. The calculated throughput may, for example, be interpolate based on the sensed channel information.

The learning step 303 is responsible for updating the throughput values in the database 202 and other parameters required in the optimization step 306.

For a certain distance and related optimal bandwidth, the corresponding throughput can vary over time. Thus, existing throughput values of tuples in the database 202 have to be updated. If the existing stored throughput in the database is denoted as $R$ and the instantaneous calculated throughput in the previous step 302 is denoted as $R'$, then the throughput may be updated by value $(R+R')/2$. Other filtering or averaging techniques may also be applied such as a moving average.

According to an embodiment, optimization parameters may also be linked to tuples in the database 202. These optimization parameters may be updated in the learning step 303 as well.

An optimization parameter is, for example the bandwidth update factor and denoted as $\partial a$. This parameter is used by the optimizer in step 306 in order to gradually search for an optimal bandwidth configuration. The learning module 205 starts by a small value for $\partial a$, such as for example 20MHz,and if there is no improvement in the throughput or the throughput is decreasing, then this factor is increased to provide exploration in the search. As such, $\partial a' = \partial a.\alpha$ where $\alpha$ is the $\partial a$ updating factor and equals, for example, to two.

The next step, namely reasoning 304, is used to match the determined distance of the communication link with the potential distances in the database 202. The matching of the distances is done by two substages.

In a first stage of the reasoning step 304, the determined distance is matched by the potential distance through the calculation of a matching factor $M$. The determined distance is denoted by $p' = [location\ AP, location\ STA]$, while the vectors of the stored potential distance in the database 202 are denoted as $P$, wherein each distance $p_i \in P$. In order to calculate the matching factor $M$ between $p'$ and each $p_i$, the Euclidian distance is calculated by

$$M_i = 1 - \sqrt{\sum_{j=1}^{4}(p_i[j] - p_i[j]')^2} \quad (Eq.1),$$

wherein $j$ is the index of the entries in the potential distance $p_i$.

In the second stage, the index of the best matching case is calculated as

$$i^* = \underset{\forall i}{argmax}\{M_i\} \quad (Eq.2).$$

The corresponding throughput of this best matching case is denoted as $R_i^*$.

The fifth step, namely decision making 305, decides whether the best matching case is similar to a potential distance based on the matching factor calculated in the previous step 304. If not, a new potential distance is created in the database 202. Accordingly, a minimum matching factor $M_{min}$ is defined. Besides, a minimum throughput value is also defined and denoted as $R_{min}$ which depends on the user demand.

If the matching factor of case $i^*$ is greater than the minimum matching factor, or $M_i^* > M_{min}$, and at the same time the throughput of case $i^*$ is greater than the minimum throughput value, or $R_{i^*} > R_{min}$, then the potential distance with case $i^*$ is retrieved from the database 202. If the above condition is not fulfilled, the optimization step 306 is performed.

In case of a non-matching case or a low throughput value of best matching cases, the optimizer is executed to calculate a new potential distance with a new bandwidth configuration.

In case of a matching case, i.e. $M_{i^*} > M_{min}$, while the throughput is not satisfactory, i.e. $R_{i^*} > R_{min}$, then the action of this case can be used by the optimizer 605 as following:

- if the determined distance is greater than the potential distance of case $i^*$, then the bandwidth is decreased by a' = a[i*] - $\partial a$; and
- if the determined distance is less than the potential distance of case $i^*$, then the bandwidth is increased by a' = a[i*] + $\partial a$; and
- if the determined distance is equal to the potential distance of case $i^*$, then the bandwidth is decreased by a' = a[i*] - $\partial a$.

In case of a non-matching case, the maximum bandwidth is selected. Next, either the selected bandwidth is optimal, thus the optimizer 306 will not be executed again. In the other condition, the bandwidth is decreased by a' = a[i*] - $\partial a$.

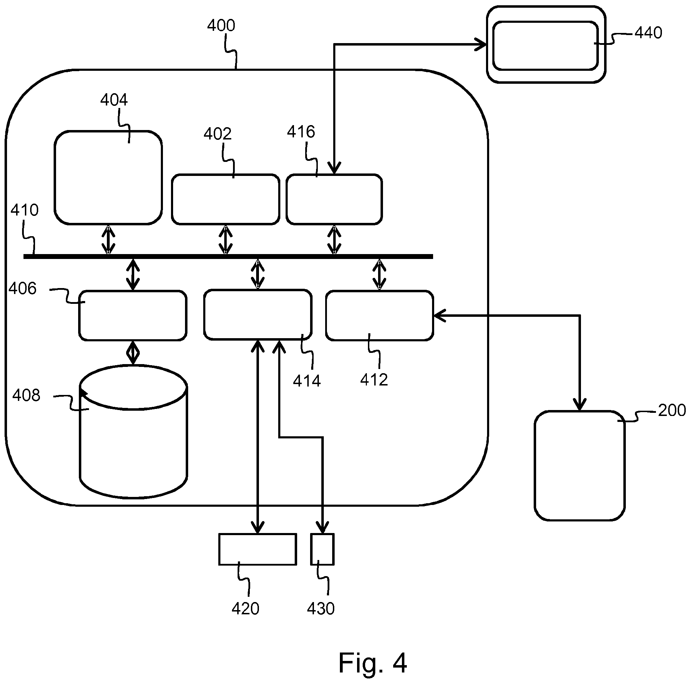

Fig. 4 shows a suitable computing system 400 for hosting the application component according to the present invention and suitable for implementing the method for selecting a bandwidth in a channel bonding configuration according to the present invention, embodiments of which are illustrated by Fig. 2 and Fig 3. Computing system 400 may in general be formed as a suitable general purpose computer and comprise a bus 410, a processor 402, a local memory 404, one or more optional input interfaces 414, one or more optional output interfaces 416, a communication interface 412, a storage element interface 406 and one or more storage elements 408. Bus 410 may comprise one or more conductors that permit communication among the components of the computing system. Processor 402 may include any type of conventional processor or microprocessor that interprets and executes programming instructions. Local memory 404 may include a random access memory, RAM, or another type of dynamic storage device that stores information and instructions for execution by processor 402 and/or a read only memory, ROM, or another type of static storage device that stores static information and instructions for use by processor 404. Input interface 414 may comprise one or more conventional mechanisms that permit an operator to input information to the computing device 400, such as a keyboard 420, a mouse 430, a pen, voice recognition and/or biometric mechanisms, etc. Output interface 416 may comprise one or more conventional mechanisms that output information to the operator, such as a display 440, a printer 450, a speaker, etc. Communication interface 412 may comprise any transceiver-like mechanism such as for example two 1Gb Ethernet interfaces that enables computing system 400 to communicate with other devices and/or systems, for example mechanisms for communicating with one or more other computing systems. The communication interface 412 of computing system 400 may be connected to such another computing system 460 by means of a local area network, LAN, or a wide area network, WAN, such as for example the internet, in which case the other computing system may for example comprise a suitable web server. Storage element interface 406 may comprise a storage interface such as for example a Serial Advanced Technology Attachment, SATA, interface or a Small Computer System Interface, SCSI, for connecting bus 410 to one or more storage elements 408, such as one or more local disks, for example 1 TB SATA disk drives, and control the reading and writing of data to and/or from these storage elements 408. Although the storage elements 408 above is described as a local disk, in general any other suitable computer-readable media such as a removable magnetic disk, optical storage media such as a CD or DVD, -ROM disk, solid state drives, flash memory cards, ... could be used.

The steps executed in the method for selecting a bandwidth in a channel bonding configuration according to the present invention, illustrated by the above embodiments, may be implemented as programming instructions stored in local memory 404 of the computing system 400 for execution by its processor 402. Alternatively, the instructions may be stored on the storage element 408 or be accessible from another computing system through the communication interface 412.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

**Claims**

1. A device for selecting a bandwidth of a communication link between an access point, AP, and an associated device, STA, in a wireless network, the device comprising:

   - an observation module configured to determine a distance of the communication link; and
   - a database comprising a set of potential distances; and wherein each potential distance is related to an optimal bandwidth; and
   - a channel bonding module configured to select from the set the optimal bandwidth of the communication link for the determined distance.

2. Device according to claim 1, wherein the optimal bandwidth corresponds to a bandwidth with a highest throughput for the potential distance.

3. Device according to claim 2, wherein each potential distance is further related to a potential throughput achievable when selecting the bandwidth according to the potential distance.

4. Device according to claim 3, further comprising an updating module configured to update in the database the potential throughput by the achieved throughput at the selected bandwidth.

5. Device according to claim 4, wherein the updating module is further configured to add in the database a new potential distance when a difference between the determined distance and the nearest potential distance is greater than a predefined value.

6. Device according to claim 5, wherein the updating module is further configured to relate as the bandwidth of the new potential distance the highest possible bandwidth of the communication link.

7. Device according to claim 6, further comprising a learning module configured to optimize the selected optimal bandwidth when the achieved throughput is less than a predefined threshold.

8. Device according to claim 7, wherein the learning module is further configured to optimize the bandwidth by:

   - decreasing the bandwidth when the determined distance is less than or equal to the potential distance; and/or
   - increasing the bandwidth when the determined distance is greater than the potential distance.

9. Method for selecting a bandwidth of a communication link between an access point, AP, and an associated device, STA, in a wireless network, the method comprising the steps of:

   - determining a distance of the communication link; and
   - selecting from a database an optimal bandwidth of the communication link for the determined distance; and wherein the database comprises a set of potential distances; and wherein each potential distance is related to a respective optimal bandwidth.

10. A computer program product comprising computer-executable instructions for performing the method according to claim 9 when the program is run on a computer.

11. A computer readable storage medium comprising the computer program product according to claim 10.

12. A data processing system programmed for carrying out the method according to claim 9.

Fig. 1

EP 3 419 356 A1

Fig. 2

EP 3 419 356 A1

Fig. 3

Fig. 4

Europäisches
Patentamt

European
Patent Office

Office européen
des brevets

# EUROPEAN SEARCH REPORT

Application Number

EP 17 17 6553

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | OFUJI Y ET AL: "Frequency Domain Channel-Dependent Scheduling Employing an Adaptive Transmission Bandwidth for Pilot Channel in Uplink Single-Carrier-FMDA Radio Access", VEHICULAR TECHNOLOGY CONFERENCE, 2006. VTC 2006-SPRING. IEEE,, vol. 1, 1 January 2006 (2006-01-01), pages 334-338, XP008100831, DOI: 10.1109/VETECS.2006.1682831 | 1,9-12 | INV. H04W72/04 |
| A | * the whole document * ----- | 2-8 | |
| X | EP 2 129 019 A1 (NTT DOCOMO INC [JP]) 2 December 2009 (2009-12-02) * paragraphs [0031], [0032], [0045], [0046] * ----- | 1,9-12 | |
| X | US 2012/051371 A1 (SARASHINA MASAHIRO [JP] ET AL) 1 March 2012 (2012-03-01) * paragraph [0011] * ----- | 1,9-12 | |
| | | | TECHNICAL FIELDS SEARCHED (IPC) H04W |

The present search report has been drawn up for all claims

| Place of search | Date of completion of the search | Examiner |
|---|---|---|
| The Hague | 23 November 2017 | Weinmiller, Jost |

**EP 3 419 356 A1**

## ANNEX TO THE EUROPEAN SEARCH REPORT
## ON EUROPEAN PATENT APPLICATION NO.

EP 17 17 6553

This annex lists the patent family members relating to the patent documents cited in the above-mentioned European search report.
The members are as contained in the European Patent Office EDP file on
The European Patent Office is in no way liable for these particulars which are merely given for the purpose of information.

23-11-2017

| Patent document cited in search report | Publication date | Patent family member(s) | Publication date |
|---|---|---|---|
| EP 2129019 A1 | 02-12-2009 | AU 2007342810 A1 | 17-07-2008 |
| | | BR PI0720783 A2 | 04-02-2014 |
| | | CA 2673785 A1 | 17-07-2008 |
| | | CN 101584140 A | 18-11-2009 |
| | | EP 2129019 A1 | 02-12-2009 |
| | | JP 4954720 B2 | 20-06-2012 |
| | | JP 2008172375 A | 24-07-2008 |
| | | KR 20090101355 A | 25-09-2009 |
| | | RU 2009129500 A | 20-02-2011 |
| | | US 2010040036 A1 | 18-02-2010 |
| | | WO 2008084721 A1 | 17-07-2008 |
| US 2012051371 A1 | 01-03-2012 | JP 5503463 B2 | 28-05-2014 |
| | | JP 2012049942 A | 08-03-2012 |
| | | US 2012051371 A1 | 01-03-2012 |

For more details about this annex : see Official Journal of the European Patent Office, No. 12/82

**EP 3 419 356 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Pervasive Computing and Communications. Proceedings of the First IEEE International Conference on IEEE. 2003